# EUROPEAN PATENT SPECIFICATION

(11) **EP 4 265 508 B1**
(45) Date of publication and mention of the grant of the patent: **25.02.2026**
(21) Application number: 23168922.5
(22) Date of filing: 20.04.2023
(51) Int. Cl.: B62J 11/16, B62K 19/40, B62K 21/04, B62K 21/12, B62K 3/04

(54) **BICYCLE FRAME SET**
FAHRRADRAHMENSATZ
ENSEMBLE CADRE DE BICYCLETTE

(30) Priority: 22.04.2022 US 202263363464 P; 13.10.2022 US 202263379355 P
(43) Date of publication of application: 25.10.2023
(73) Proprietor: Giant Manufacturing Co., Ltd., Taichung City, 40763 (TW)
(72) Inventor: SHIH, Jing-Ru, Taichung City 40763 (TW); YANG, Chao-Shun, Taichung City 40763 (TW)
(74) Representative: Becker, Eberhard

(56) References cited:
- DE-A1- 102019 114 018
- GB-A- 2 540 372
- US-A1- 2018 370 594

## Description

### TECHNICAL FIELD

The present disclosure relates to a bicycle frame set.

### BACKGROUND

Cycling has been popular for its various roles, including transportation, travel, leisure, exercise, sports, and competitions, and received a wide audience, including amateur riders, avid riders, and professional cyclists and athletes. As cycling increases in popularity, the demand for better-performing bicycle frames is growing. Specifically, bicycles with improved aerodynamic characteristics can significantly enhance the overall riding efficiency and the cyclist's performance. Document DE102019114018A1 shows all the features of the preamble of independent claim 1.

In particular, the cyclist encounters air resistance while cycling, and an aerodynamic design aims to minimize the resistance by reducing drag, which is the force of air pushing against the cyclist and the bike. In racing competitions, such as a triathlon, an athlete needs to hold an aero-optimized riding position, while remaining comfortable over a long distance to achieve higher speeds with less effort. In view of the above, there is a need for an improved bicycle frame with an optimized aerodynamic design, so that less energy is required to overcome wind resistance during the cycling, and the cyclist may maintain the speed for longer periods.

### SUMMARY

Embodiments of the present disclosure provide a bicycle frame set. The bicycle frame set includes a front fork, a head tube, a main tube, a seat tube, and a seat stay. The front fork includes a right fork leg and a left fork leg. The front fork is rotatably coupled to the head tube. The main tube is connected to the head tube. The seat tube is connected to the main tube, the seat tube being configured to connect to a seat post. The seat stay includes a first portion connected to the seat tube at a front end of the first portion of the seat stay. When a rear wheel and a front wheel are mounted to the bicycle frame set, the first portion of the seat stay extends in a horizontal direction substantially parallel with respect to a ground plane supporting the rear wheel and the front wheel.

It is to be understood that the foregoing general descriptions and the following detailed descriptions are explanatory only and merely provide examples, and are not restrictive of the disclosure, as claimed. The invention is defined by independent claim 1. Preferred embodiments are defined by the dependent claims.

### BRIEF DESCRIPTION OF THE DRAWINGS

The accompanying drawings described herein are intended to provide further understanding of the present disclosure and constitute a part of this application. Examples of embodiments of the present disclosure and the description thereof are used for explaining the present disclosure rather than constituting the improper limitation to the present disclosure. In the accompanying drawings:
FIG. 1 is a left-side view of a portion of a bicycle frame set, according to some embodiments of the present disclosure.
FIG. 2A and FIG. 2B are corresponding front elevation views of the bicycle frame set of FIG. 1, according to some embodiments of the present disclosure.
FIG. 3A and FIG. 3B are perspective views of a detailed portion of the bicycle frame set, according to some embodiments of the present disclosure.
FIG. 3C illustrates a detailed portion associated with parallel fork legs of the bicycle frame set, according to some embodiments of the present disclosure.
FIG. 4 illustrates a front elevation view of a detailed portion of the bicycle frame set, according to some embodiments of the present disclosure.
FIG. 5 is a rear elevation view of the bicycle frame set, according to some embodiments of the present disclosure.
FIG. 6A and FIG. 6B are left side views of a detailed portion associated with the front fork of the bicycle frame set, according to some embodiments of the present disclosure.
FIG. 7A and FIG. 7B are different perspective views of the detailed portion of the seat stay, according to some embodiments of the present disclosure.
FIG. 8 illustrates a left side view of a detailed portion associated with the seat stay of the bicycle frame set, according to some embodiments of the present disclosure.
FIG. 9 is another perspective view of the detailed portion of the seat stay, according to some embodiments of the present disclosure.
FIG. 10A and FIG. 10B respectively illustrate air drag areas resulting the air resistance during the ride, according to some embodiments of the present disclosure.

### DETAILED DESCRIPTION

Reference will now be made in detail to examples of embodiments, which are illustrated in the accompanying drawings and disclosed herein. The implementations set forth in the following description of examples of embodiments are examples of systems consistent with the aspects related to the disclosure and do not limit the scope of the present disclosure.

As used herein, the term "or" encompasses all possible combinations, except where infeasible. For example, if it is stated that a device, structure, or module may include A or B, then, unless specifically stated otherwise or infeasible, the device, structure, or module may include A, B, or A and B. As a second example, if it is stated that a device, structure, or module may include A, B, or C, then, unless specifically stated otherwise or infeasible, it may include A, B, C, or A and B, or A and C, or B and C, or A and B and C.

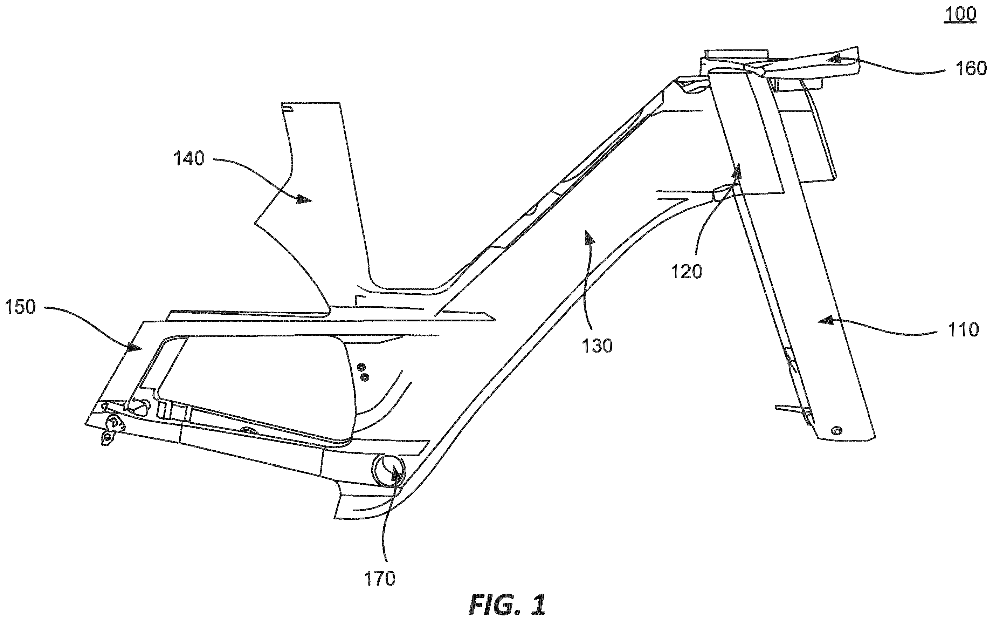

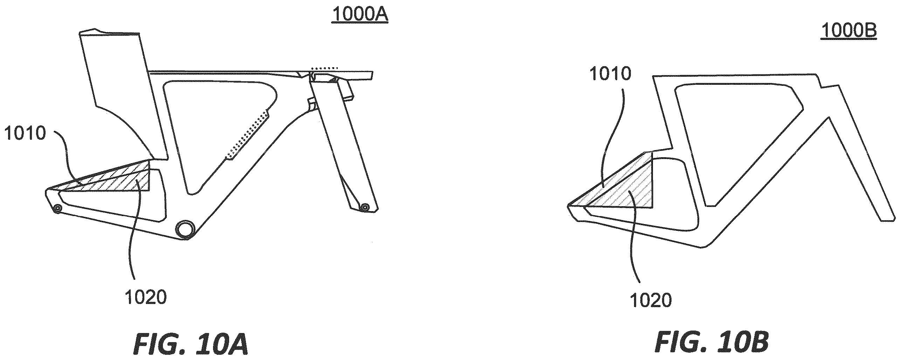

FIG. 1 is a left-side view of a portion of a bicycle frame set 100, according to some embodiments of the present disclosure. As shown in FIG. 1, in some embodiments, the bicycle frame set 100 may include a front fork 110, a head tube 120, a main tube 130, a seat tube 140, and a seat stay 150. The bicycle frame set 100 allows cyclists of different heights and body dimensions to achieve an optimized fit to produce maximum power in an optimized aerodynamic position while remaining comfortable over long distances. In some embodiments, the front fork 110 is configured to receive a front wheel of the bicycle and secure the front wheel and a pair of handlebars 160 installed on the front fork 110. The front fork 110 is rotatably coupled to the head tube 120. Accordingly, the front fork 110 and the front wheel installed on the front fork 110 can be rotatable, in response to the rider's control. It is appreciated that various modifications to the bicycle frame set 100 of FIG. 1 may be made. For example, in some other embodiments, the bicycle frame set 100 may further include a top tube connecting the head tube 120 to the seat tube 140, as depicted in FIG. 10A and FIG 10B, discussed below.

In some embodiments, the head tube 120 and the main tube 130 may be integrated as a single piece in the manufacturing process, but the present disclosure is not limited thereto. In some other embodiments, the head tube 120 and the main tube 130 may be separate parts. In the embodiment depicted in FIG. 1, the main tube 130 is connected to the head tube 120. For example, the main tube 130 may also be referred to as a down tube, which connects with the head tube 120, the seat tube 140, and a bottom bracket (BB) shell 170 of the bicycle. The seat tube 140 may be connected to the main tube 130. The seat tube 140 may be configured to connect to a seat post of the bicycle. As shown in FIG. 1, the seat stay 150 may extend from the seat tube 140 and connect the seat tube 140 to rear fork ends (also known as rear dropouts), where a rear wheel may be attached to the bicycle frame set 100.

In some embodiments, an effective seat tube angle of the seat tube 140 can be adjusted by changing the saddle setback position. For example, a rear clamp on the seat post may provide an independent fore/aft saddle adjustment range of about 70 mm. When the saddle is pushed to a rear position, the effective seat tube angle may be about 76 degrees. When the saddle is pushed to its most forward position, the seat tube angle may be about 80 degrees.

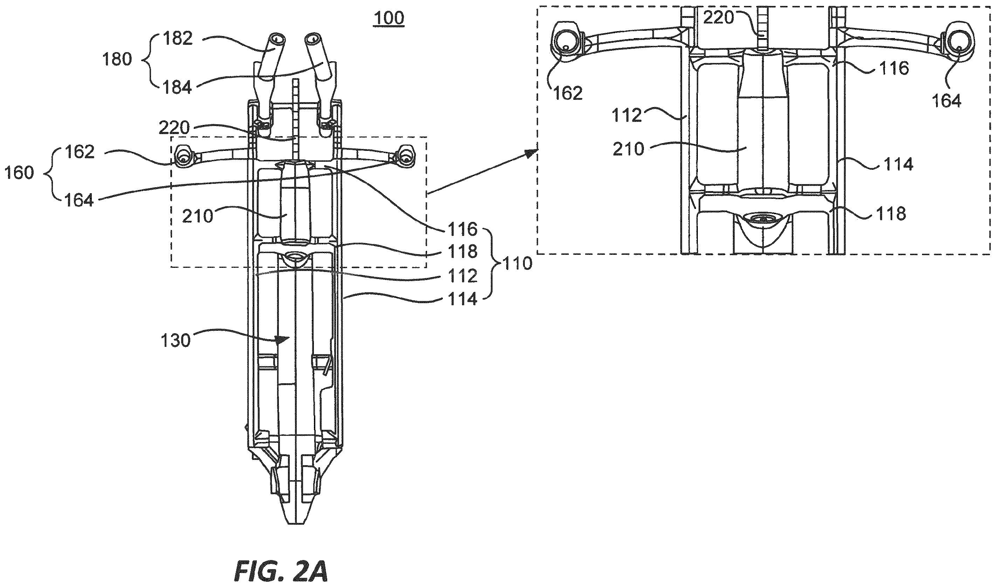

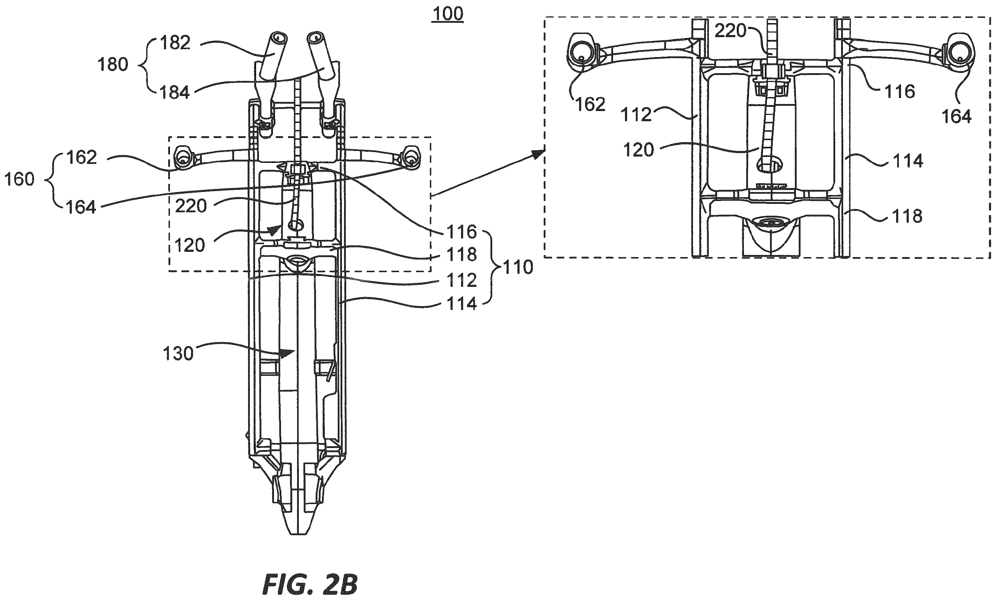

FIG. 2A and FIG. 2B are corresponding front elevation views of the bicycle frame set 100 of FIG. 1, according to some embodiments of the present disclosure. FIG. 2A illustrates the bicycle frame set 100 with a cover 210 attached to the front fork 110, and FIG. 2B illustrates the bicycle frame set 100 with the cover 210 removed from the front fork 110. As shown in the embodiments of FIG. 2A and FIG. 2B, in some embodiments, the bicycle frame set 100 may include parallel forks and double crowns in the design of the front fork 110.

In particular, the front fork 110 may include a right fork leg 112 and a left fork leg 114. The right fork leg 112 and the left fork leg 114 may be substantially parallel to each other. In addition, the front fork 110 may further include an upper crown 116 and a lower crown 118. In some embodiments, both the upper crown 116 and the lower crown 118 may connect the right fork leg 112 and the left fork leg 114, and the lower crown 118 may be parallel to the upper crown 116. As shown in FIG. 2A, the cover 210 may be attached to the front fork 110 and may be connected to the upper crown 116 and the lower crown 118, to provide aerodynamic fairing and reduce the air resistance during cycling.

In addition, the bicycle frame set 100 may include a pair of handlebars 160 attached on the front fork 110, and a separate pair of rest handlebars 180. Specifically, the pair of handlebars 160 may include a right handlebar 162 and a left handlebar 164. The pair of rest handlebars 180 may include a right rest handlebar 182 and a left rest handlebar 184. The handlebars 160 and the rest handlebars 180 will be described in detail in later paragraphs in accompany with corresponding drawings.

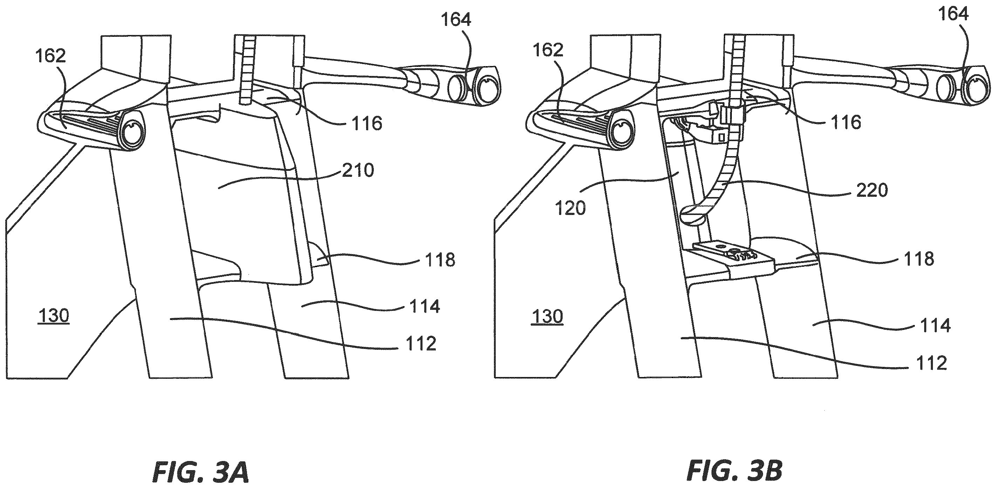

As shown in FIGs. 2A and 2B, in some embodiments, the bicycle frame set 100 may include a hose 220 (or a straw) for a hydration system (e.g., a triathlon hydration system) of the bicycle. Reference is made to FIG. 3A and FIG. 3B, which are front, top, left perspective views of the detailed portion of the upper crown 116, the lower crown 118, and the hose 220 for the hydration system, according to some embodiments of the present disclosure. FIG. 3A illustrates the bicycle frame set 100 with the cover 210 attached to the front fork 110, and FIG. 3B illustrates the bicycle frame set 100 with the cover 210 removed from the front fork 110.

As shown in FIG. 3A and FIG. 3B, the hose 220 may be arranged within the main tube 130 and may extend through the head tube 120. The hose 220 may be further arranged to extend through a space between the upper crown 116 and the lower crown 118 and a hole arranged on a top surface of the cover 210. The hose 220, after passing through the hole arranged on the cover 210, may be coupled and secured to a coupling region of the upper crown 116. In some embodiments, the hydration system of the bicycle may provide a fluid container (e.g., installed on the bicycle frame set 100 or within the bicycle frame set 100) and a fluid path in communication with the fluid container and the hose 220. Accordingly, the hydration system may provide a hands-free solution that allows a rider to hydrate during the cycling, using the hose 220 enabling the rider to draw water from the fluid container.

For example, the fluid container may be a removable bladder inside the main tube 130. The capacity of the fluid container may be adapted to the frame size. The fluid can be accessed via the hose 220 extending from the aero cover 210 at the head tube 120, allowing the riders to hydrate while cycling without having to remove their hands from the bars or come out of their aero riding positions. In some embodiments, the hydration system may further include a centrally located refill port to achieve a quick and easy refill process. In some other embodiments, the bicycle frame set 100 may further include bottle cage mounts on the front of the seat tube 140 to carry extra fluids for training rides.

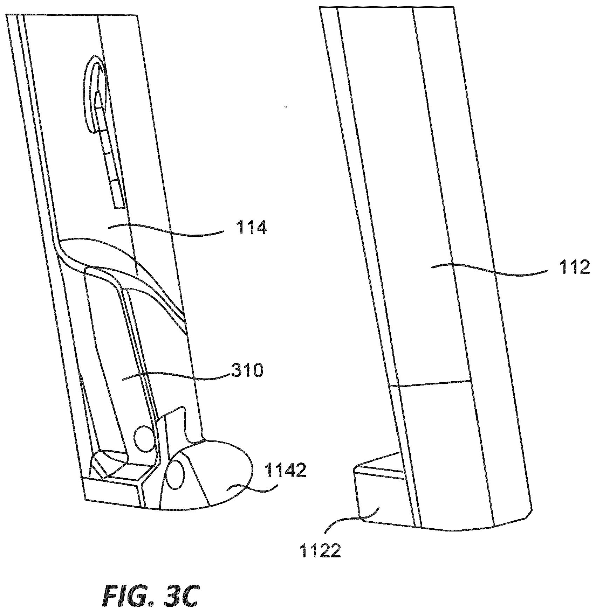

FIG. 3C illustrates a detailed portion associated with the parallel fork legs 112 and 114 of the bicycle frame set 100, according to some embodiments of the present disclosure. As shown in the embodiment depicted in FIG. 3C, the right fork leg 112 may include a first protrusion 1122 at the bottom end of the right fork leg 112. The left fork leg 114 may include a second protrusion 1142 at the bottom end of the left fork leg 114. Each of the first protrusion 1122 and the second protrusion 1142 may extend inwardly toward each other. The first protrusion 1122 and the second protrusion 1142 may be configured to connect to a front hub for the front wheel. As shown in the drawings, in some embodiments, the first protrusion 1122 may extend vertically from the right fork leg 112 and the second protrusion 1142 may extend vertically from the left fork leg 114.

As shown in FIG. 3C, the front fork 110 may further include a disc mount assembly 310. The disc mount assembly 310 may be mounted on the left fork leg 114 of the front fork 110. In particular, the disc mount assembly 310 may be mounted on a lower portion of the left fork leg 114 adjacent to the second protrusion 1142 and the bottom end of the left fork leg 114, but the present disclosure is not limited thereto.

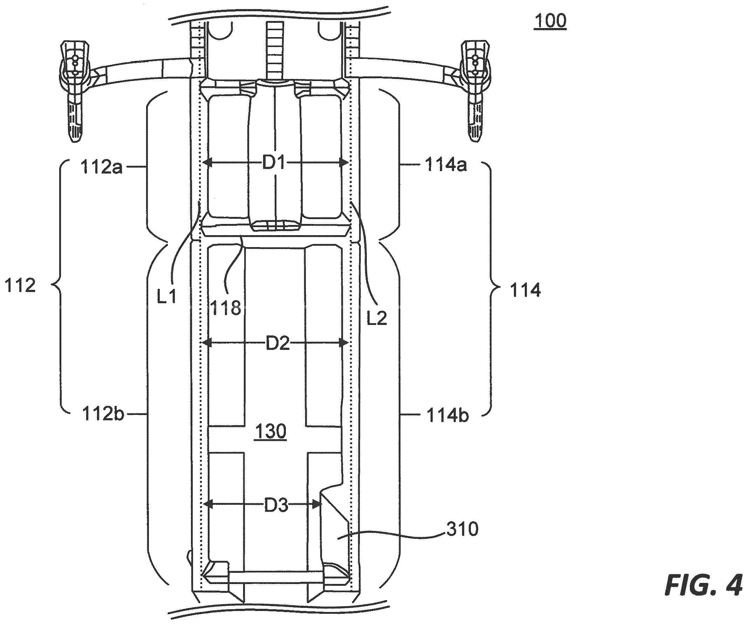

FIG. 4 illustrates a front elevation view of a detailed portion of the bicycle frame set 100, according to some embodiments of the present disclosure. Examples of parameters associated with the parallel forks and double crowns are provided in FIG. 4, but the present disclosure is not limited thereto. As shown in FIG. 4, the right fork leg 112 may extend along a first straight axis (e.g., central axis L1) from the first end (e.g., a top end) of the right fork leg 112 to the second end (e.g., a bottom end) of the right fork leg 112. The left fork leg 114 may extend along a second straight axis (e.g., central axis L2) from the first end (e.g., a top end) of the left fork leg 114 to the second end (e.g., a bottom end) of the left fork leg 114. In particular, the left fork leg and the right fork leg in the traditional design do not extend along straight axes and are not parallel from the top end to the bottom end. Thus, the traditional design suffers more aerodynamic penalties. Compared to the traditional design, the right fork leg 112 and the left fork leg 114 provide a parallel design from the top to the bottom to minimize the aerodynamic penalties during the cycling and thus improve the overall cycling experience.

As depicted in FIG. 4, the right fork leg 112 and the left fork leg 114 may each include a first portion (e.g., portion 112a, 114a) above the lower crown 118 and a second portion (e.g., portion 112b, 114b) below the lower crown 118. As shown in FIG. 4, the first distance D1 represents a distance between the center of the first portion 112a of the right fork leg 112 and the center of the first portion 114a of the left fork leg 114. The second distance D2 represents a distance between the center of the second portion 112b of the right fork leg 112 and the center of the second portion 114b of the left fork leg 114.

In some embodiments, the first distance D1 is greater than about 100 mm. In some embodiments, the first distance D1 is greater than about 110 mm. In some embodiments, a ratio of the first distance D1 to the second distance D2 is within a range of 0.9 to 1.2. In some embodiments, the ratio of the first distance D1 to the second distance D2 is within a range of 0.9 to 1.1. In some embodiments, the ratio of the first distance D1 to the second distance D2 is within a range of 0.95 to 1.05. In some embodiments, the first distance D1 is substantially equal to the second distance D2, and an error between the first distance D1 and the second distance D2 is negligible. For example, in some embodiments, the first distance D1 may be about 134.1 mm, and the second distance D2 may be about 134.6 mm.

In addition, consistent with the embodiments of FIG. 3C, the disc mount assembly 310 in FIG. 4 may be mounted on the left fork leg 114 of the front fork 110. The third distance D3 represents a distance between the disc mount assembly 310 and the right fork leg 112. In some embodiments, a ratio of the first distance D1 to the third distance D3 is greater than 1. In some embodiments, the ratio of the first distance D1 to the third distance D3 is greater than 1.2.

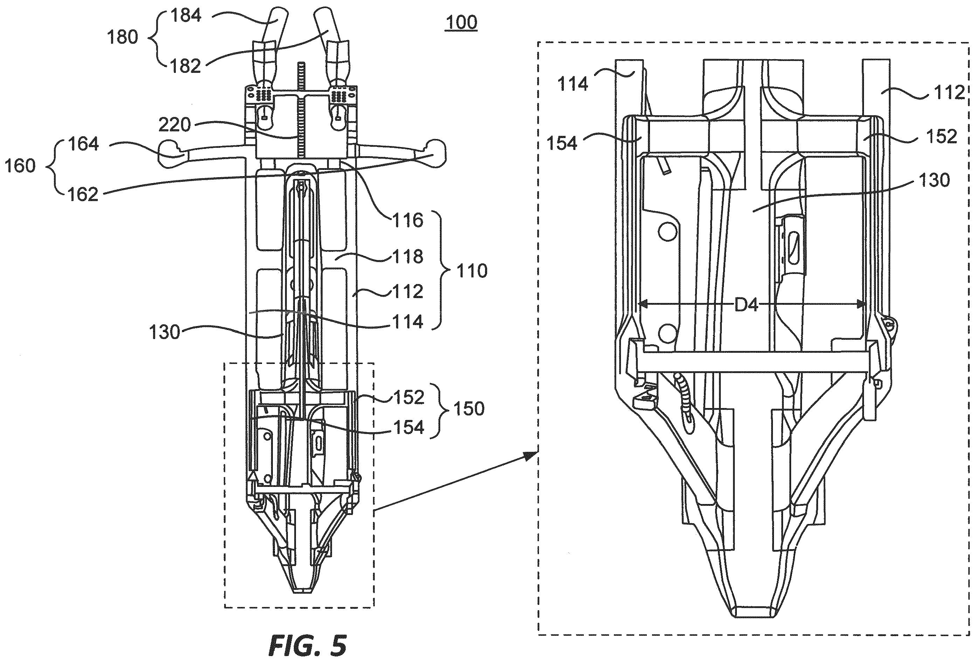

FIG. 5 is a rear elevation view of the bicycle frame set 100, according to some embodiments of the present disclosure. As shown in FIG. 5, in some embodiments, the seat stay 150 includes a right seat stay 152 and a left seat stay 154. In some embodiments, a distance between a center of the right fork leg 112 and a center of the left fork leg 114 may be substantially equal to a distance between a dropout end of the right seat stay 152 and a dropout end of the left seat stay 154. As shown in FIG. 5, the fourth distance D4 represents a distance between a dropout end of the right seat stay 152 and a dropout end of the left seat stay 154. In some embodiments, a ratio of the first distance D1 to the fourth distance D4 is within the range of 0.8 to 1.2. In some embodiments, the ratio of the first distance D1 to the fourth distance D4 is within a range of 0.9 to 1.1. In some embodiments, the ratio of the first distance D1 to the fourth distance D4 is within a range of 0.95 to 1.05.

That is, a portion of the right seat stay 152 may be aligned with respect to the right fork leg 112, and a portion of the left seat stay 154 may be aligned with respect to the left fork leg 114 to reduce the air resistance during cycling in order to optimize the aerodynamic performance of the bicycle, which improves the overall riding efficiency and provides a desired riding experience to the rider.

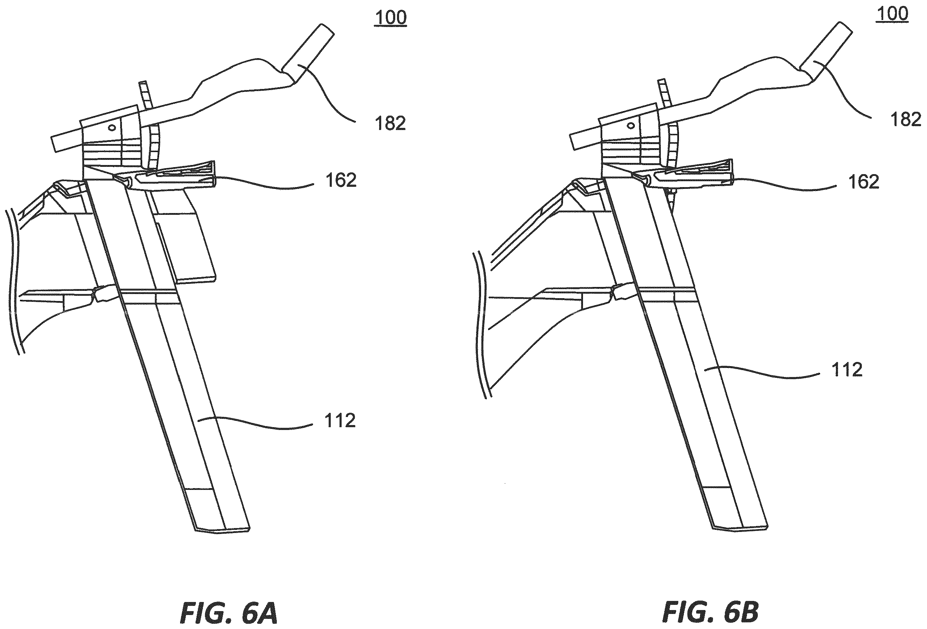

FIG. 6A and FIG. 6B are left side views of a detailed portion associated with the front fork 110 of the bicycle frame set 100, according to some embodiments of the present disclosure. FIG. 6A illustrates the bicycle frame set 100 with the cover 210 attached to the front fork 110, and FIG. 6B illustrates the bicycle frame set 100 with the cover 210 removed from the front fork 110. Consistent with the embodiments of FIGs. 2A, 2B, and 5 above, as shown in FIG. 6A and FIG. 6B, an upper portion of the right fork leg 112 of the front fork 110 may connect to the right rest handlebar 182. Specifically, an upper portion of the right fork leg 112 of the front fork 110 may connect to the right handlebar 162 at a position lower than the right rest handlebar 182. On the other side, an upper portion of the left fork leg 114 of the front fork 110 may also connect to the left rest handlebar 184. Similarly, the upper portion of the left fork leg 114 of the front fork 110 may connect to the left handlebar 164 at a position lower than the left rest handlebar 184.

In some embodiments, the rest handlebars 182 and 184 may be an extension component (e.g., extension bars) in addition to the handlebars 162 and 164 of the bicycle. The rest handlebars 182 and 184 may be long, straight, or slightly curved bars extending outwardly and upwardly to provide an additional hand position for the rider, allowing the rider to adjust his or her grip and posture during cycling. In some embodiments, the rider may switch between different riding positions (e.g., a more upright riding position on the main handlebars 162 and 164, and a more leanedforward, aerodynamic position on the rest handlebars 182 and 184), which allows the rider to shift his or her weight and posture to reduce fatigue and discomfort, and maintain comfort and efficiency in different riding scenarios, such as on long rides or during a cycling climb. In some embodiments, the rest handlebars 182 and 184 may be designed to be adjustable to customize the angle and position to fit the rider's preference and to provide a more aerodynamic riding position for the rider. In some embodiments, the rest handlebars 182 and 184 may provide the arm extensions that can be moved forward and backward, and the angles can be adjusted without removing any spacers. In some embodiments, the stack height can be raised or lowered without moving the extension bars.

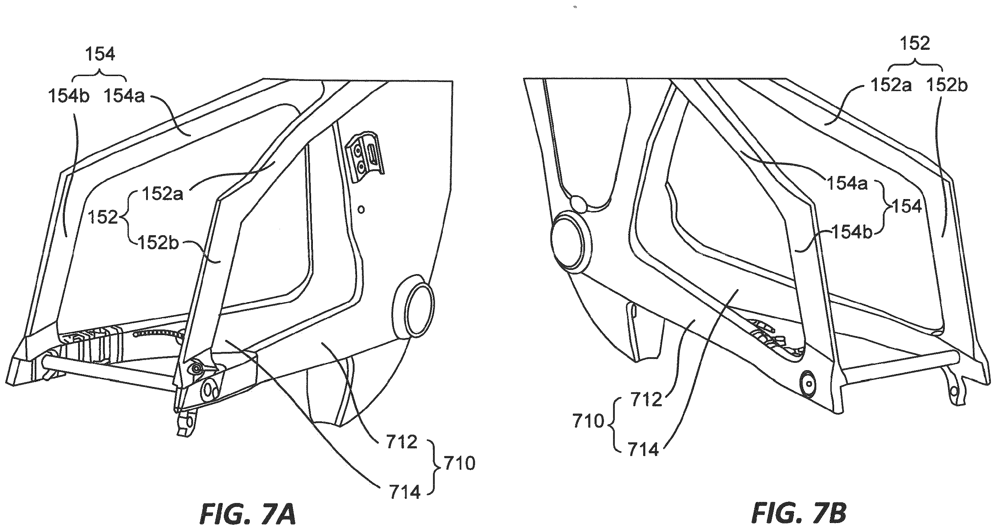

FIG. 7A and FIG. 7B are different perspective views of the detailed portion of the seat stay 150, according to some embodiments of the present disclosure. As shown in FIG. 7A and FIG. 7B, the right seat stay 152 may include a first portion 152a and a second portion 152b. Similarly, the left seat stay 154 may include a first portion 154a and a second portion 154b. A chain stay 710 of the bicycle may include a right chain stay 712 and a left chain stay 714 connecting the bottom bracket (BB) shell of the bicycle to the rear wheel. The second portion 152b of the right seat stay 152 may be connected between the rear end of the first portion 152a of the right seat stay 152 and the right chain stay 712 of the bicycle frame set 100. Similarly, the second portion 154b of the left seat stay 154 may be connected between the rear end of the first portion 154a of the left seat stay 154 and the left chain stay 714 of the bicycle frame set 100.

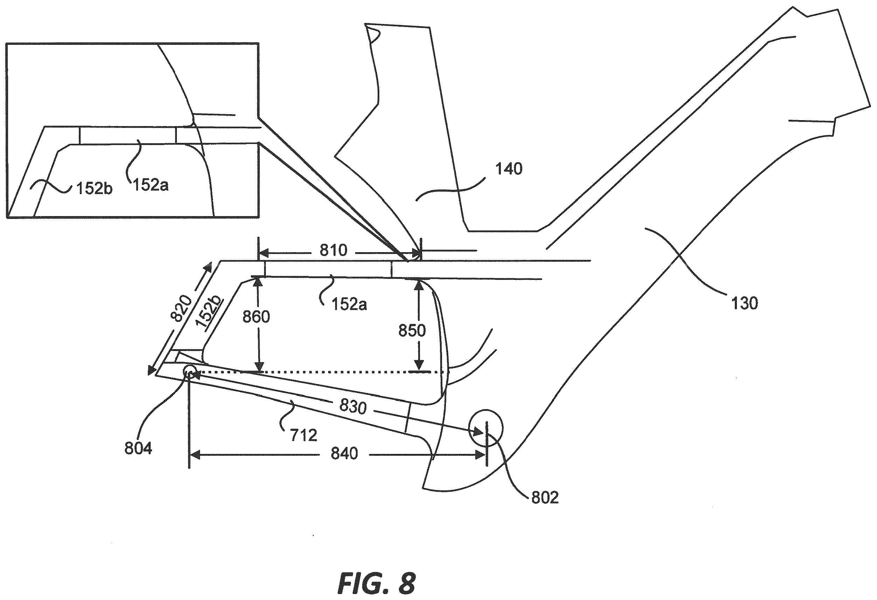

FIG. 8 illustrates a left side view of a detailed portion associated with the seat stay 150 of the bicycle frame set 100, according to some embodiments of the present disclosure. As shown in FIG. 8, the first portion 152a of the right seat stay 152 may be connected to the seat tube 140 at a front end of the first portion 152a and may extend horizontally with respect to the ground. Specifically, when a rear wheel and a front wheel are mounted to the bicycle frame set 100, the first portion 152a of the right seat stay 152 may extend in a horizontal direction substantially parallel with respect to a ground plane supporting the rear wheel and the front wheel. The first portion 152a and the first portion 154a extending horizontally result in less air resistance because the horizontal portions provide a smaller cross-section area facing the wind, and cause less aerodynamic drag force faced the bicycle frame set 100 during the cycling.

Similarly, on the opposite side not shown in FIG. 8, the first portion 154a of the left seat stay 154 may be connected to the seat tube 140 at a front end of the first portion 154a and may extend in a horizontal direction substantially parallel with respect to the ground plane supporting the rear wheel and the front wheel. In the paragraphs below, examples of parameters of the right seat stay 152 will be described in reference to FIG. 8, which provides an optimized aerodynamic performance and improved riding efficiency of the bicycle. It is understood that the right seat stay 152 and the left seat stay 154 can be symmetrical, and thus parameters and designs of the left seat stay 154 are not repeated herein for the sake of brevity.

FIG. 8 illustrates examples of parameters of the bicycle frame set 100, including a length 810 of the first portion 152a, a length 820 of the second portion 152b, a distance 830 between a center 802 of the bottom bracket (BB) and a center 804 of the rear wheel, a horizontal distance 840 between the center 802 of the bottom bracket (BB) and the center 804 of the rear wheel, a first vertical distance 850 from the center 804 of the rear wheel to the front end of the first portion 152a, and a second vertical distance 860 from the center 804 of the rear wheel to the rear end of the first portion of 152a.

Specifically, the length 810 represents the length of the first portion 152a, and the length 820 represents the length of the second portion 152b. In some embodiments, the length 810 of the first portion 152a is greater than the length 820 of the second portion 152b, and an angle between the first portion 152a and the second portion 152b is greater than 90 degrees. For example, in some embodiments, the length 810 of the first portion 152a is greater than 120 mm, 150 mm, or 200 mm.

In addition, the distance 830 represents the distance between the center 802 of the bottom bracket (BB) and the center 804 of the rear wheel, and the distance 840 represents the horizontal distance between the center 802 of the bottom bracket (BB) and the center 804 of the rear wheel. In some embodiments, the ratio of the length 810 of the first portion 152a to the distance 830 between the center 802 and the center 804 is greater than 0.3. In some embodiments, the ratio of the length 810 to the distance 830 is greater than 0.4, 0.5, or 0.55. In some embodiments, the ratio of the length 810 of the first portion 152a to the horizontal distance 840 between the center 802 and the center 804 is greater than 0.3. In some embodiments, the ratio of the length 810 to the distance 840 is greater than 0.4, 0.5, or 0.55.

In addition, the first vertical distance 850 represents the vertical distance from the center 804 of the rear wheel to the front end of the first portion 152a, and the second vertical distance 860 represents the vertical distance from the center 804 of the rear wheel to the rear end of the first portion of 152a. In some embodiments, the first vertical distance 850 is less than 150 mm. In some embodiments, the first vertical distance 850 may be less than 140 mm, 130 mm, or 120 mm. Similarly, in some embodiments, the second vertical distance 860 is less than 150 mm. In some embodiments, the second vertical distance 860 may be less than 140 mm, 130 mm, or 120 mm.

According to the invention, a ratio of the first vertical distance 850 to the second vertical distance 860 is within a range of 0.9 to 1.1. In some embodiments, the ratio of the first vertical distance 850 to the second vertical distance 860 may be within a range of 0.95 to 1.05.

In some embodiments, a ratio of the first vertical distance 850 to the length 810 of the first portion 152a is greater than 0.55. In some embodiments, a ratio of the first vertical distance 850 to the length 810 may be greater than 0.7 or 1. For example, the ratio of the first vertical distance 850 to the length 810 may be within a range of 0.55 to 1.3, within a range of 0.7 to 1.3, or within a range of 1 to 1.3.

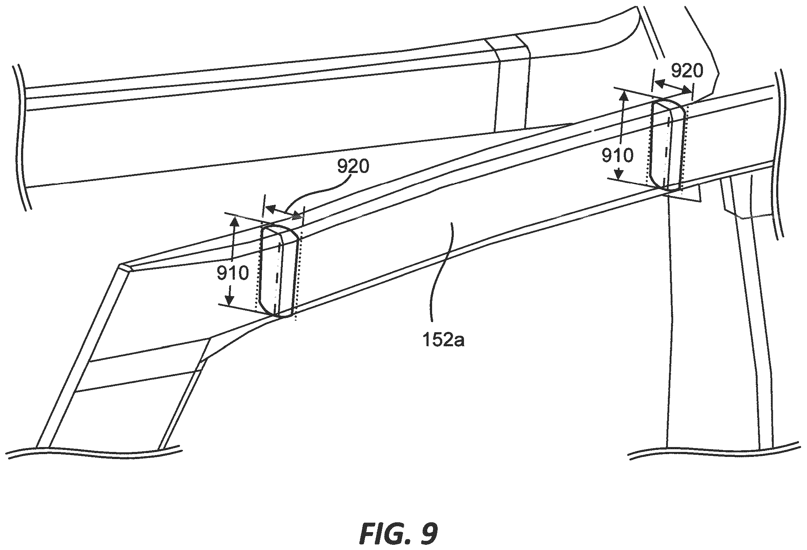

FIG. 9 is another perspective view of the detailed portion of the seat stay 150 and illustrates examples of parameters of the seat stay 152, according to some embodiments of the present disclosure. As shown in FIG. 9, a height 910 of the first portion 152a of the seat stay 152 may be about 25 mm, and a width 920 of the first portion 152a of the seat stay 152 may be about 12 mm. In some embodiments, the first portion 152a may have the same height 910 and the same width 920 at the front end of the first portion 152a and the rear end the first portion 152a. In the embodiment depicted in FIG. 9, a ratio between the height 910 and the width 920 of the seat stay is greater than 2.

FIG. 10A and FIG. 10B respectively illustrate air drag areas resulting the air resistance during the ride, according to some embodiments of the present disclosure. In the above embodiments of FIG. 1-FIG. 9, the bicycle frame set 100 of some embodiments of the present disclosure may include a horizontal seat stay 150 which extends horizontally from the seat tube 140. On the other hand, as shown in FIGs. 10A and 10B, compared to the bicycle frame set 100 of FIG. 1-FIG. 9, both bicycle frame sets 1000A and 1000B may include a sloped seat stay 1010. In such embodiments, due to the sloped seat stay 1010, a greater air drag area 1020 would cause the rider to experience greater air resistance during the ride, which reduces the overall riding efficiency. In other words, by the design of the right seat stay 152 with an extended horizontal first portion 152a and the left seat stay 154 with a horizontal first portion 154a in the bicycle frame set 100, as depicted in the embodiments depicted in FIGs. 1-9, a smaller air drag area of the seat stay 150 can be achieved, which improves the riding efficiency and the riding experience.

In view of the above, the design of the parallel front forks and the horizontal seat stay provided in various embodiments of the present disclosure may reduce air resistance and thus improve the overall aerodynamic efficiency. Thus, the bicycle frame set may provide a desired riding experience and enhance the riding performance of cyclists.

In the drawings and specification, there have been disclosed examples of embodiments. It will be apparent to those skilled in the art that various modifications and variations can be made to the disclosed system. Other embodiments will be apparent to those skilled in the art from consideration of the specification and practice of the disclosed system

## Claims

1. A bicycle frame set (100) with a rear wheel and a front wheel, comprising:
a head tube (120);
a front fork (110) rotatably coupled to the head tube (120), the front fork (110) comprising a right fork leg (112) and a left fork leg (114);
a main tube (130) connected to the head tube (120);
a seat tube (140) connected to the main tube (130), the seat tube (140) being configured to connect to a seat post; and
a seat stay (150) comprising a first portion (152a, 154a) connected to the seat tube (140) at a front end of the first portion (152a, 154a) of the seat stay (150), wherein when the rear wheel and the front wheel are mounted to the bicycle frame set (100),
the first portion (152a, 154a) of the seat stay (150) extends in a horizontal direction substantially parallel with respect to a ground plane supporting the rear wheel and the front wheel,
wherein the seat stay (150) further comprises a second portion (152b, 154b), the second portion (152b, 154b) being connected to a rear end of the first portion (152a, 154a) of the seat stay (150) and a chain stay (710) of the bicycle frame set (100), and wherein the bicycle frame set is **characterized in that** a length (810) of the first portion (152a, 154a) of the seat stay (150) is greater than a length (820) of the second portion (152b, 154b) of the seat stay (150),
wherein a ratio of a first vertical distance (850) from a center (804) of a rear wheel to the front end of the first portion (152a, 154a) of the seat stay (150) to a second vertical distance (860) from the center (804) of the rear wheel to a rear end of the first portion (152a, 154a) of the seat stay (150) is within a range of 0.9 to 1.1.

2. The bicycle frame set (100) of claim 1, wherein an angle between the first portion (152a, 154a) of the seat stay (150) and the second portion (152b, 154b) of the seat stay (150) is greater than 90 degrees.

3. The bicycle frame set (100) of claim 1, wherein a ratio of the length (810) of the first portion (152a, 154a) of the seat stay (150) to a distance (830) between a center (802) of a bottom bracket (BB) and the center (804) of the rear wheel is greater than 0.3.

4. The bicycle frame set (100) of claim 1, wherein a ratio of the length (810) of the first portion (152a, 154a) of the seat stay (150) to a distance (830) between a center (802) of a bottom bracket (BB) and the center (804) of the rear wheel is greater than 0.5.

5. The bicycle frame set (100) of claim 1, wherein a ratio of the length (810) of the first portion (152a, 154a) of the seat stay (150) to a horizontal distance (840) between a center (802) of a bottom bracket (BB) and the center (804) of the rear wheel is greater than 0.3.

6. The bicycle frame set (100) of claim 1, wherein a ratio of the length (810) of the first portion (152a, 154a) of the seat stay (150) to a horizontal distance (840) between a center (802) of a bottom bracket (BB) and the center (804) of the rear wheel is greater than 0.5.

7. The bicycle frame set (100) of claim 1, wherein the first vertical distance (850) from the center (804) of the rear wheel to the front end of the first portion (152a, 154a) of the seat stay (150) is less than 150 mm.

8. The bicycle frame set (100) of claim 1, wherein the first vertical distance (850) from the center (804) of the rear wheel to the front end of the first portion (152a, 154a) of the seat stay (150) is less than 130 mm.

9. The bicycle frame set (100) of claim 1, wherein the ratio of the first vertical distance (850) from the center (804) of the rear wheel to the front end of the first portion (152a, 154a) of the seat stay (150) to the second vertical distance (860) from the center (804) of the rear wheel to the rear end of the first portion (152a, 154a) of the seat stay (150) is within a range of 0.95 to 1.05.

10. The bicycle frame set (100) of claim 1, wherein a ratio of the first vertical distance (850) from the center (804) of the rear wheel to the front end of the first portion (152a, 154a) of the seat stay (150) to the length (810) of the first portion (152a, 154a) of the seat stay (150) is greater than 0.55.

11. The bicycle frame set (100) of claim 1, wherein a ratio of the first vertical distance (850) from the center (804) of the rear wheel to the front end of the first portion (152a, 154a) of the seat stay (150) to the length (810) of the first portion (152a, 154a) of the seat stay (150) is within a range of 0.7 to 1.3.

12. The bicycle frame set (100) of claim 1, wherein the second vertical distance (860) from the center (804) of the rear wheel to the rear end of the first portion (152a, 154a) of the seat stay (150) is less than 150 mm.

13. The bicycle frame set (100) of claim 1, wherein the second vertical distance (860) from the center (804) of the rear wheel to the rear end of the first portion (152a, 154a) of the seat stay (150) is less than 130 mm.

14. The bicycle frame set (100) of claim 1, wherein the length (810) of the first portion (152a, 154a) is greater than 120 mm.

15. The bicycle frame set (100) of claim 1, wherein the length (810) of the first portion (152a, 154a) is greater than 150 mm.

16. The bicycle frame set (100) of claim 1, wherein a ratio of a height (910) of the first portion (152a, 154a) of the seat stay (150) to a width (920) of the first portion (152a, 154a) of the seat stay (150) is greater than 2.

17. The bicycle frame set (100) of claim 1, wherein the right fork leg (112) of the front fork (110) and the left fork leg (114) of the front fork (110) are substantially parallel to each other.

## Patentansprüche

1. Fahrradrahmensatz (100) mit einem Hinterrad und einem Vorderrad, umfassend:
ein Steuerrohr (120);
eine Vorderradgabel (110), die drehbar mit dem Steuerrohr (120) gekoppelt ist, wobei die Vorderradgabel (110) ein rechtes Gabelbein (112) und ein linkes Gabelbein (114) umfasst;
ein mit dem Steuerrohr (120) verbundenes Oberrohr (130);
ein mit dem Oberrohr (130) verbundenes Sitzrohr (140), wobei das Sitzrohr (140) so konfiguriert ist, dass es mit einer Sattelstütze verbunden werden kann; und
eine Sitzstrebe (150), die einen ersten Abschnitt (152a, 154a) umfasst, der mit dem Sitzrohr (140) an einem vorderen Ende des ersten Abschnitts (152a, 154a) der Sitzstrebe (150) verbunden ist, wobei, wenn das Hinterrad und das Vorderrad an dem Fahrradrahmensatz (100) montiert sind, sich der erste Abschnitt (152a, 154a) der Sitzstrebe (150) in einer horizontalen Richtung erstreckt, die im Wesentlichen parallel zu einer Bodenebene ist, die das Hinterrad und das Vorderrad trägt,
wobei die Sitzstrebe (150) ferner einen zweiten Abschnitt (152b, 154b) umfasst, der zweite Abschnitt (152b, 154b) mit einem hinteren Ende des ersten Abschnitts (152a, 154a) der Sitzstrebe (150) und einer Kettenstrebe (710) des Fahrradrahmensatzes (100) verbunden ist, und wobei der Fahrradrahmensatz
**dadurch gekennzeichnet ist, dass**
eine Länge (810) des ersten Abschnitts (152a, 154a) der Sitzstrebe (150) größer als eine Länge (820) des zweiten Abschnitts (152b, 154b) der Sitzstrebe (150) ist,
wobei ein Verhältnis eines ersten vertikalen Abstands (850) von einer Mitte (804) eines Hinterrades zu dem vorderen Ende des ersten Abschnitts (152a, 154a) der Sitzstrebe (150) zu einem zweiten vertikalen Abstand (860) von der Mitte (804) des Hinterrades zu einem hinteren Ende des ersten Abschnitts (152a, 154a) der Sitzstrebe (150) innerhalb eines Bereichs von 0,9 bis 1,1 liegt.

2. Fahrradrahmensatz (100) nach Anspruch 1, wobei ein Winkel zwischen dem ersten Abschnitt (152a, 154a) der Sitzstrebe (150) und dem zweiten Abschnitt (152b, 154b) der Sitzstrebe (150) größer als 90 Grad ist.

3. Fahrradrahmensatz (100) nach Anspruch 1, wobei ein Verhältnis der Länge (810) des ersten Abschnitts (152a, 154a) der Sitzstrebe (150) zu einem Abstand (830) zwischen einer Mitte (802) eines Tretlagers (BB) und der Mitte (804) des Hinterrades größer als 0,3 ist.

4. Fahrradrahmensatz (100) nach Anspruch 1, wobei ein Verhältnis der Länge (810) des ersten Abschnitts (152a, 154a) der Sitzstrebe (150) zu einem Abstand (830) zwischen einer Mitte (802) eines Tretlagers (BB) und der Mitte (804) des Hinterrades größer als 0,5 ist.

5. Fahrradrahmensatz (100) nach Anspruch 1, wobei ein Verhältnis der Länge (810) des ersten Abschnitts (152a, 154a) der Sitzstrebe (150) zu einem horizontalen Abstand (840) zwischen einer Mitte (802) eines Tretlagers (BB) und der Mitte (804) des Hinterrades größer als 0,3 ist.

6. Fahrradrahmensatz (100) nach Anspruch 1, wobei ein Verhältnis der Länge (810) des ersten Abschnitts (152a, 154a) der Sitzstrebe (150) zu einem horizontalen Abstand (840) zwischen einer Mitte (802) eines Tretlagers (BB) und der Mitte (804) des Hinterrades größer als 0,5 ist.

7. Fahrradrahmensatz (100) nach Anspruch 1, wobei der erste vertikale Abstand (850) von der Mitte (804) des Hinterrades zu dem vorderen Ende des ersten Abschnitts (152a, 154a) der Sitzstrebe (150) weniger als 150 mm beträgt.

8. Fahrradrahmensatz (100) nach Anspruch 1, wobei der erste vertikale Abstand (850) von der Mitte (804) des Hinterrades zu dem vorderen Ende des ersten Abschnitts (152a, 154a) der Sitzstrebe (150) weniger als 130 mm beträgt.

9. Fahrradrahmensatz (100) nach Anspruch 1, wobei das Verhältnis des ersten vertikalen Abstands (850) von der Mitte (804) des Hinterrades zu dem vorderen Ende des ersten Abschnitts (152a, 154a) der Sitzstrebe (150) zu dem zweiten vertikalen Abstand (860) von der Mitte (804) des Hinterrades zu dem hinteren Ende des ersten Abschnitts (152a, 154a) der Sitzstrebe (150) innerhalb eines Bereichs von 0,95 bis 1,05 liegt.

10. Fahrradrahmensatz (100) nach Anspruch 1, wobei ein Verhältnis des ersten vertikalen Abstands (850) von der Mitte (804) des Hinterrades zu dem vorderen Ende des ersten Abschnitts (152a, 154a) der Sitzstrebe (150) zu der Länge (810) des ersten Abschnitts (152a, 154a) der Sitzstrebe (150) größer als 0,55 ist.

11. Fahrradrahmensatz (100) nach Anspruch 1, wobei ein Verhältnis des ersten vertikalen Abstands (850) von der Mitte (804) des Hinterrades zu dem vorderen Ende des ersten Abschnitts (152a, 154a) der Sitzstrebe (150) zu der Länge (810) des ersten Abschnitts (152a, 154a) der Sitzstrebe (150) innerhalb eines Bereichs von 0,7 bis 1,3 liegt.

12. Fahrradrahmensatz (100) nach Anspruch 1, wobei der zweite vertikale Abstand (860) von der Mitte (804) des Hinterrades zu dem hinteren Ende des ersten Abschnitts (152a, 154a) der Sitzstrebe (150) weniger als 150 mm beträgt.

13. Fahrradrahmensatz (100) nach Anspruch 1, wobei der zweite vertikale Abstand (860) von der Mitte (804) des Hinterrades zu dem hinteren Ende des ersten Abschnitts (152a, 154a) der Sitzstrebe (150) weniger als 130 mm beträgt.

14. Fahrradrahmensatz (100) nach Anspruch 1, wobei die Länge (810) des ersten Abschnitts (152a, 154a) größer als 120 mm ist.

15. Fahrradrahmensatz (100) nach Anspruch 1, wobei die Länge (810) des ersten Abschnitts (152a, 154a) größer als 150 mm ist.

16. Fahrradrahmensatz (100) nach Anspruch 1, wobei ein Verhältnis einer Höhe (910) des ersten Abschnitts (152a, 154a) der Sitzstrebe (150) zu der Breite (920) des ersten Abschnitts (152a, 154a) der Sitzstrebe (150) größer als 2 ist.

17. Fahrradrahmensatz (100) nach Anspruch 1, wobei das rechte Gabelbein (112) der Vorderradgabel (110) und das linke Gabelbein (114) der Vorderradgabel (110) im Wesentlichen parallel zueinander sind.

## Revendications

1. Ensemble de cadre de bicyclette (100) avec une roue arrière et une roue avant, comprenant :
un tube de direction (120);
une fourche avant (110) couplée de manière rotative au tube de direction (120), la fourche avant (110) comprenant une branche de fourche droite (112) et une branche de fourche gauche (114);
un tube principal (130) relié au tube de direction (120);
un tube de selle (140) relié au tube principal (130), le tube de selle (140) étant configuré pour se connecter à une tige de selle; et
un hauban (150) comprenant une première partie (152a, 154a) reliée au tube de selle (140) à une extrémité avant de la première partie (152a, 154a) du hauban (150), dans lequel, lorsque la roue arrière et la roue avant sont montées sur l'ensemble de cadre de bicyclette (100),
la première partie (152a, 154a) du hauban (150) s'étend dans une direction horizontale sensiblement parallèle à un plan de sol supportant la roue arrière et la roue avant, dans lequel le hauban (150) comprend en outre une deuxième partie (152b, 154b), la deuxième partie (152b, 154b) étant reliée à une extrémité arrière de la première partie (152a, 154a) du hauban (150) et à une base (710) de l'ensemble de cadre de bicyclette (100), et dans lequel l'ensemble de cadre de bicyclette est **caractérisé en ce qu'**une longueur (810) de la première partie (152a, 154a) du hauban (150) est supérieure à une longueur (820) de la deuxième partie (152b, 154b) du hauban (150),
dans lequel un rapport entre une première distance verticale (850) entre le centre (804) d'une roue arrière et l'extrémité avant de la première partie (152a, 154a) du hauban (150) à une deuxième distance verticale (860) entre le centre (804) de la roue arrière et l'extrémité arrière de la première partie (152a, 154a) du hauban (150) est comprise entre 0,9 et 1,1.

2. Ensemble de cadre de bicyclette (100) selon la revendication 1, dans lequel l'angle entre la première partie (152a, 154a) du hauban (150) et la deuxième partie (152b, 154b) du hauban (150) est supérieur à 90 degrés.

3. Ensemble de cadre de bicyclette (100) selon la revendication 1, dans lequel le rapport entre la longueur (810) de la première partie (152a, 154a) du hauban (150) à la distance (830) entre le centre (802) d'un boîtier de pédalier (BB) et le centre (804) de la roue arrière est supérieur à 0,3.

4. Ensemble de cadre de bicyclette (100) selon la revendication 1, dans lequel le rapport entre la longueur (810) de la première partie (152a, 154a) du hauban (150) à la distance (830) entre le centre (802) d'un boîtier de pédalier (BB) et le centre (804) de la roue arrière est supérieur à 0,5.

5. Ensemble de cadre de bicyclette (100) selon la revendication 1, dans lequel le rapport entre la longueur (810) de la première partie (152a, 154a) du hauban (150) à la distance horizontale (840) entre le centre (802) d'un boîtier de pédalier (BB) et le centre (804) de la roue arrière est supérieur à 0,3.

6. Ensemble de cadre de bicyclette (100) selon la revendication 1, dans lequel le rapport entre la longueur (810) de la première partie (152a, 154a) du hauban (150) à la distance horizontale (840) entre le centre (802) d'un boîtier de pédalier (BB) et le centre (804) de la roue arrière est supérieur à 0,5.

7. Ensemble de cadre de bicyclette (100) selon la revendication 1, dans lequel la première distance verticale (850) entre le centre (804) de la roue arrière et l'extrémité avant de la première partie (152a, 154a) du hauban (150) est inférieure à 150 mm.

8. Ensemble de cadre de bicyclette (100) selon la revendication 1, dans lequel la première distance verticale (850) entre le centre (804) de la roue arrière et l'extrémité avant de la première partie (152a, 154a) du hauban (150) est inférieure à 130 mm.

9. Ensemble de cadre de bicyclette (100) selon la revendication 1, dans lequel le rapport entre la première distance verticale (850) entre le centre (804) de la roue arrière et l'extrémité avant de la première partie (152a, 154a) du hauban (150) à la deuxième distance verticale (860) entre le centre (804) de la roue arrière et l'extrémité arrière de la première partie (152a, 154a) du hauban (150) est compris entre 0,95 et 1,05.

10. Ensemble de cadre de bicyclette (100) selon la revendication 1, dans lequel le rapport entre la première distance verticale (850) entre le centre (804) de la roue arrière et l'extrémité avant de la première partie (152a, 154a) du hauban (150) et la longueur (810) de la première partie (152a, 154a) du hauban (150) est supérieur à 0,55.

11. Ensemble de cadre de bicyclette (100) selon la revendication 1, dans lequel le rapport entre la première distance verticale (850) entre le centre (804) de la roue arrière et l'extrémité avant de la première partie (152a, 154a) du hauban (150) à la longueur (810) de la première partie (152a, 154a) du hauban (150) est compris entre 0,7 et 1,3.

12. Ensemble de cadre de bicyclette (100) selon la revendication 1, dans lequel la deuxième distance verticale (860) entre le centre (804) de la roue arrière et l'extrémité arrière de la première partie (152a, 154a) du hauban (150) est inférieure à 150 mm.

13. Ensemble de cadre de bicyclette (100) selon la revendication 1, dans lequel la deuxième distance verticale (860) entre le centre (804) de la roue arrière et l'extrémité arrière de la première partie (152a, 154a) du hauban (150) est inférieure à 130 mm.

14. Ensemble de cadre de bicyclette (100) selon la revendication 1, dans lequel la longueur (810) de la première partie (152a, 154a) est supérieure à 120 mm.

15. Ensemble de cadre de bicyclette (100) selon la revendication 1, dans lequel la longueur (810) de la première partie (152a, 154a) est supérieure à 150 mm.

16. Ensemble de cadre de bicyclette (100) selon la revendication 1, dans lequel le rapport entre la hauteur (910) de la première partie (152a, 154a) du hauban (150) et la largeur (920) de la première partie (152a, 154a) du hauban (150) est supérieure à 2.

17. Ensemble de cadre de bicyclette (100) selon la revendication 1, dans lequel la branche de fourche droite (112) de la fourche avant (110) et la branche de fourche gauche (114) de la fourche avant (110) sont sensiblement parallèles l'une à l'autre.
